# EUROPEAN PATENT APPLICATION

(11) **EP 3 219 985 A1**
(43) Date of publication of application: **20.09.2017**
(21) Application number: 16160118.2
(22) Date of filing: 14.03.2016
(51) Int. Cl.: F03D 80/80, F03D 13/20

(54) **WIND TURBINE TOWER DOOR FRAME**

(71) Applicant: Siemens Aktiengesellschaft, 80333 München (DE)
(72) Inventor: Lam, Johnny Steven, 8543 Hornslet (DK)

(57) **Abstract**

The invention relates to a door frame of a wind turbine tower and a method to produce the door frame.

A method is disclosed to manufacture a door frame 15 of a wind turbine tower, wherein the method comprises the steps of rolling a ring-shaped blank 2 in a rolling mill to achieve a ring 4 with a certain predetermined thickness and width of the material, and forming the ring 4 into a predetermined form of the door frame 15 by a tool 11, 12 in a press.

## Description

The invention relates to a door frame of a wind turbine tower and a method to produce the door frame.

Wind turbines comprise a rotor, a nacelle and a tower. The rotor is rotatable connected to the nacelle and the nacelle is rotatable connected to the tower.

The wind interacts with the rotor of the wind turbine. Due to the interaction, forces are introduced into the wind turbine. The forces lead to loads in the tower. The tower needs to be rigid enough to withstand the loads.

The tower of a wind turbine is often manufactured of steel. Cylindrical steel segments are combined to form the tower. The thickness of the segments is calculated accordingly, so that the tower can bear the loads.

Every opening in the tower wall weakens the rigidity of the tower. Openings in the tower wall are necessary to form an entrance into the tower, for example. As the opening weakens the rigidity of the tower, a reinforcement is introduced around the door opening, to compensate the loss of stability.

It is known to manufacture the door frame by cutting the frame out of a steel plate. The steel plate is than added to the tower wall, to increase the overall thickness of the tower in the area of around the door opening.

It is also known to manufacture a tower wall segment with increased thickness and cut the door opening into the plate. Thus the area around the door opening shows an increased thickness and thus an increased rigidity.

It is also known to connect a door frame to the door opening. A door frame is introduced into the opening along the edge of the tower wall. The door frame reinforces the tower in the area of the door opening to compensate the weakening effect of the door opening.

The door frame is fabricated out of steel parts, the parts are formed to fit to the shape of the opening and are than welded together to form a door frame.

The door frame provides a high stiffness, but it shows the disadvantage, that the welding of the door frame has to be done very carefully. In addition, it has to be checked thoroughly to make sure, that the door frame is capable to distribute the loads at the edge of the door opening in the tower. A weak welding spot leads to an uneven effect of the door frame and might lead to failures during the lifetime of the wind turbine.

The aim of the invention is therefore to provide an advanced door frame that overcomes the drawback of the prior art.

The object of the invention is achieved by the independent claims 1 and 5. Further features of the invention are disclosed in the dependant claims.

A method is disclosed to manufacture a doorframe of a wind turbine tower, wherein the method comprises the steps of rolling a ring-shaped blank in a rolling mill to achieve a ring with a certain predetermined thickness and width of the material, and forming the ring into a predetermined form of the doorframe by a tool in a press.

A ring-shaped blank is rolled in a rolling mill. The ring-shaped blank can be a slice of a round steal bar with a hole.

In the rolling mill, the ring-shaped blank is rolled in a way that the width and the thickness of the material are influenced. The ring-shaped blank is rolled into a ring until the thickness at the width of the material are of the wanted dimensions. Therefore, the rolling mill comprises two sets of rollers, whereby one set of rollers influences the width of the material and the other side of rollers influences the thickness of the material of the ring.

The ring, that is achieved by rolling the ring-shaped blank, is then forced into a predetermined form in a press by pressing the rings by tools. A predetermined form of the doorframe can be an oval or elliptical shape of the doorframe, for example.

The thickness of the material of the doorframe is measured vertical to the plane of the ring, and thus in parallel to the rotational axis of the ring.

The width of the material is measured in radial direction and encompasses the material of one side of the ring.

By manufacturing the door frame by the method described, the door frame that is achieved comprises material along its circumference that shows mainly homogeneous properties. The properties of the material are equal to the properties of a forged material.

There is no welding seam or no bolded connection in the ring of material forming the door frame. Thus, areas of unsteady material properties are avoided.

Thus, an even distribution of forces within the door frame is achieved. Thus, also a more even distribution of the forces in a tower wall, where the door frame is attached to, is achieved.

The method comprises the further step of machining the ring to increase the accuracy of the desired dimensions.

After rolling the ring to a certain predetermined width and thickness of the material, the accuracy of the desired dimensions can be increased by machining the ring. The machining of the ring can be done by cutting the material on an engine lathe.

Thus, the accuracy of the width and the thickness of the material of the ring can be increased. In addition, a certain predetermined roughness of the surface of the ring can be achieved.

The method comprises the additional step of normalizing the ring by heating.

After rolling and machining the ring, the material of the ring can be normalized by heating the ring. Thus, any inner tension of the material is removed. Thus, an even more homogeneous distribution of the forces within the doorframe of the wind turbine tower is achieved.

The method comprises the additional step of machining the ring in a way to achieve a thickness of the ring varying along the radius of the ring.

The ring can be machined in a way to achieve a varying thickness of the ring. The thickness of the ring is measured vertical to the plane of the ring. Thus, the thickness of the ring is measured in parallel to the axis of rotation of the ring.

The thickness of the ring may vary along the radius of the ring. The material on the inner side of the ring is in a position with a smaller radius, than the material at the outside of the ring.

Along the radius of the ring, the thickness of the material can change. The varying thickness of the ring can be achieved by machining the ring for example by cutting the material of the ring on an engine lathe.

A doorframe of a wind turbine tower is disclosed whereby the doorframe is manufactured by rolling a ring-shaped plane in a rolling mill to achieve a ring with a certain predetermined thickness and width of the material and by forming the ring into a predetermined shape of the doorframe by a press.

The door frame is manufactured out of a ring of rolled and formed material, whereby the door frame comprises material with mainly homogeneous properties along the circumference of the ring.

A doorframe is manufactured with a method as described above.

Thus, the door frame comprises a ring of rolled and formed material. Thus, the door frame comprises a closed ring of material with mainly homogeneous properties along the ring.

The door frame comprises a closed ring of rolled material. Thus, the material of the door frame shows improved capabilities of taking forces from the wind turbine tower and distributing forces along the ring.

The properties of the material allow for an improved lifetime of the doorframe of the wind turbine. Rolled material experiences less fatigue than normal casted material.

The ring is machined in a way to achieve a varying thickness of the ring along the radius of the ring seen in a radial crosscut through one side of the ring perpendicular to the plane of the ring.

The ring comprises a first thickness at a first radial section of the material of the ring, and a second thickness in a second radial section of the material of the ring.

A first radial section of the material of the ring is present in a first radial area of the ring. The radius is measured from the rotational axis of the ring outwardly towards the ring. A second radial section is present in a second radial area of the ring.

At a first radial section, the material of the ring comprises a first thickness. At a second radial section, the material of the ring comprises a second thickness.

Thus, the ring comprises radial sections of different thickness of material. Thus, the shape of the crosscut of the ring can be shaped in a way to fulfill certain prerequisites and functions.

Different thickness at different radial sections of the ring can be used for example to attach a door to the doorframe or for example for a better load distribution along the ring and a better load distribution in the tower wall adjacent to the door frame.

The ring comprises a step in the thickness of the material of the ring from the first thickness of the first radial section of the material of the ring to the second thickness in the second radial section of the material of the ring.

The ring shows a different thickness in a first and a second radial section. The thickness of the ring changes from the first thickness to the second thickness in at least one step.

Thus, a radial surface is present at the surface of the ring between the first radial section and the second radial section.

The ring comprises an area with a gradual transition in the thickness of the material from the first thickness to the second thickness in a radial section between the first and the second radial section of the ring.

A third radial section is present between the first and the second radial section of the ring. The ring comprises a first thickness and a first radial section and a second thickness in the second radial section and a section between the first radial section and the second radial section.

The thickness of the material changes from the first thickness to the second thickness in a gradual transition. Thus, the thickness is increased gradually from the lower thickness to the higher thickness.

The gradual transition is present in at least a part of the radial section. In the third radial section between the first radial section and the second radial section, the thickness of the material can also exceed the limits between the first thickness and the second thickness so that the thickness of the material in the section between the first and the second section can, for example, be higher than the larger thickness or can be lower than the smaller thickness in part.

Thus, the shape of the ring seen in a crosscut through the material of the ring can be shaped individually.

The shape of the material and the gradual transition area seen in a crosscut through the material of the ring comprises a radius.

The radius is used to avoid sharp edges in the shape of the ring.

Thus, smooth transition between the first thickness and the second thickness in the first radial section and in the second radial sections can be achieved.

The shape of the material in the gradual transition area seen in a crosscut through the material of the ring comprises a linear section.

A linear section and the change from a first thickness to a second thickness can be used to achieve a gradual transition area between the first radial section of the ring and the second radial section.

The first radial section of the ring is a section with a larger radius than the second radial section.

Thus, the first radial section is closer to the outer area of the ring, and a second radial section is closer to the inner area of the ring. The inner area of the ring is the area with the material with the lowest radius measured from the axis of rotation of the ring. The outer area of the ring is the area of the material with the largest radius of the ring.

Thus, a first thickness of the material is present close to the outer area of the ring and a second thickness of the material is present close to the inner area of the ring.

The first thickness is smaller than the second thickness. The first thickness of the material of the ring is present in a first radial section and the second thickness of the material is present in a second radial section of the ring.

The first thickness is smaller than the second thickness. The increase in the thickness of the material from the first thickness to the second thickness can be achieved by a step, for example, or by a transition area with a gradual transition with a radius or a linear section for example.

The invention is shown in more detail by the help of figures. The figures show a preferred configuration and do not limit the scope of the invention.
- FIG 1: shows a first step of manufacturing the door frame,
FIG 2 shows a second step in manufacturing a door frame,
FIG 3 shows a third step in manufacturing a door frame for a wind turbine,
FIG 4 shows the fourth step of manufacturing a door frame,
FIG 5 shows the fifth step of manufacturing a door frame,
FIG 6 shows the sixth step of manufacturing a door frame.

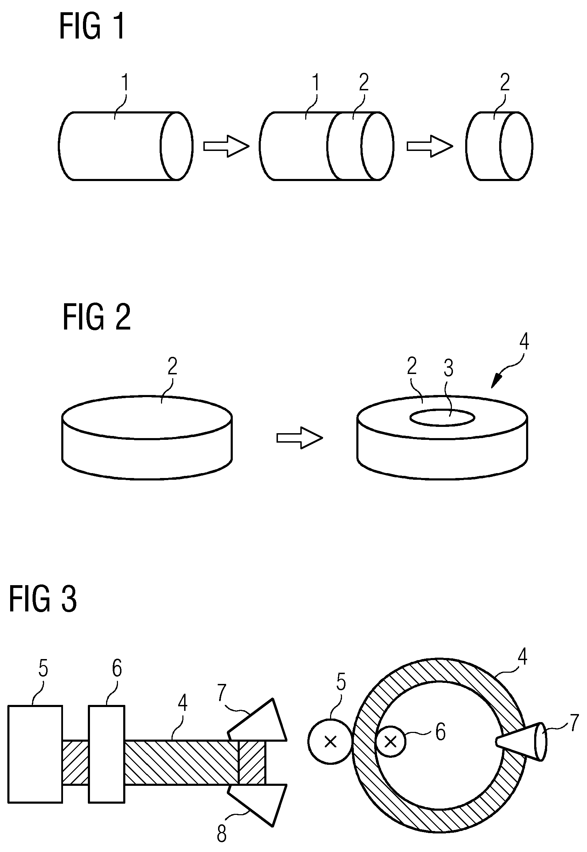

FIG 1 shows a first step of manufacturing the door frame.

FIG 1 shows a first step of manufacturing a door frame of a wind turbine. A bar of steel is provided, as it was received from the steel mill. The bar of steel 1 is preferably a round bar.

A slice of steel 2 is cut from the bar of steel 1. The slice 2 cut from the bar 1 has the desired size and mass to produce a door frame for a wind turbine, considering the fabrication tolerances and material waste during manufacturing.

FIG 2 shows a second step in manufacturing a door frame.

A hole 3 is punched into the slice or disc 2 of material during a hot-forming process. Thus, a donut-shaped ring of steel 4 is formed out of the disc 2.

FIG 3 shows a third step in manufacturing a door frame for a wind turbine.

The ring of steel 4 is hot formed to achieve the desired thickness and size needed for the door frame.

The ring 4 is forged by rollers, whereby a first pair of rollers 5 and 6 influences the thickness of the material, and a second pair of rollers 7 and 8 influence the height of the material.

During the forging process the steel ring 4 is increased in diameter while the height and the thickness of the material of the ring 4 are reduced.

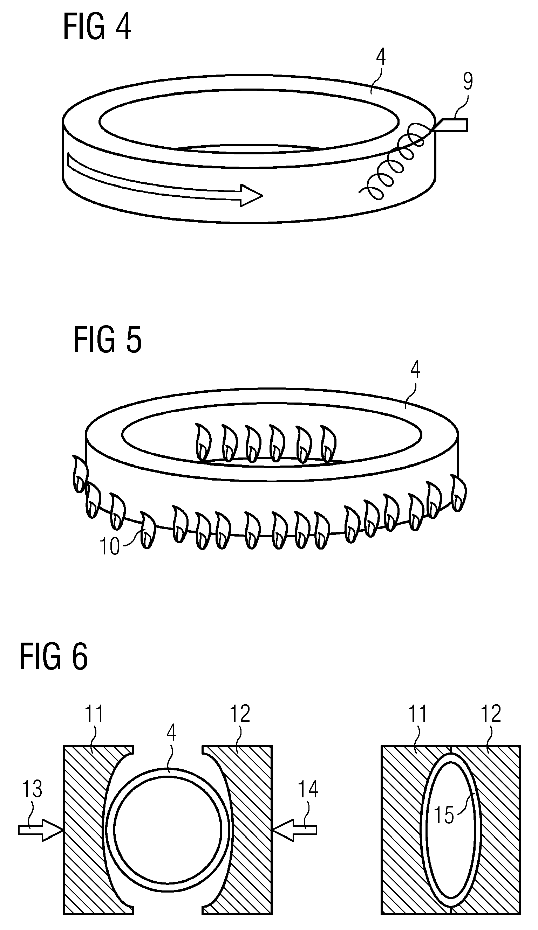

FIG 4 shows the fourth step of manufacturing a door frame of a wind turbine tower.

FIG 4 shows the fourth step of manufacturing a door frame. After cooling of the ring 4, the ring 4 is machined to achieve a desired shape. The ring 4 is machined by a tool 9 to achieve the predetermined height and thickness.

In addition, the steel ring 4 may be machined to achieve a desired shape seen in a crosscut through the ring 4 in a radial direction. The shape of the ring, seen in a crosscut through the material of the ring, and achieved after machining, is the shape of the material of the door frame as later attached to the wind turbine.

The shape of the ring 4 seen in a crosscut through the material of the ring in a radial direction can for example be a rectangular crosscut, a stepped crosscut, a crosscut with a recess, a rounded, elliptical, circular crosscut for example.

During the machining process any kind of shape desired for the crosscut through the material of the door frame is later attached to the wind turbine can be achieved.

FIG 5 shows the fifth step of manufacturing a door frame.

After machining the ring 4 into the desired shape, the ring 4 is normalized by heating to achieve the desired mechanical properties of the material.

FIG 6 shows the sixth step of manufacturing a door frame.

Immediately after normalization of the ring 4, the ring 4 is brought into the desired form of the door frame in a hot forming process.

Therefore, the ring 4 is placed between the tools, in this case two half shells 11, 12, of a press. Forces 13, 14 are applied to the tools 11, 12 to press the hot steel ring 4 into the shape of the door frame 15.

The door frame 15 can then be attached to an opening in a wind turbine tower to be used as a door frame.

The illustration in the drawings is in schematic form. It is noted that in different figures, similar or identical elements are provided with the same reference signs.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

It should be noted that the use of "a" or "an" throughout this application does not exclude a plurality, and "comprising" does not exclude other steps or elements. Also elements described in association with different embodiments may be combined. It should also be noted that reference signs in the claims should not be construed as limiting the scope of the claims.

## Claims

1. Method to manufacture a door frame (15) of a wind turbine tower, wherein the method comprises the steps of
- rolling a ring-shaped blank (2) in a rolling mill to achieve a ring (4) with a certain predetermined thickness and width of the material, and
- forming the ring (4) into a predetermined form of the door frame (15) by a tool (11, 12) in a press.

2. Method according to claim 1, comprising the additional step of
- machining the ring (4) to increase the accuracy of the desired dimensions.

3. Method according to one of the preceding claims, comprising the additional step of
- normalizing the ring (4) by heating.

4. Method according to one of the preceding claims, comprising the additional steps of
- machining the ring (4) in a way to achieve a thickness of the ring (4), varying along the radius of the ring.

5. Door frame of a wind turbine tower, whereby the door frame is manufactured by rolling a ring-shaped blank in a rolling mill to achieve a ring with a certain predetermined thickness and width of the material, and by forming the ring into the predetermined shape of the door frame by a press,
**characterized in that** the door frame is manufactured out of a ring of rolled and formed material, whereby the door frame comprises material with mainly homogeneous properties along the ring.

6. Door frame of a wind turbine according to claim 5, whereby the ring (4) is machined in a way to achieve a varying thickness of the ring (4) along the radius of the ring (4), seen in a radial crosscut through one side of the ring (4) perpendicular to the plain of the ring, **characterized in that** the ring (4) comprises a first thickness in a first radial section of the material of the ring (4), and a second thickness in a second radial section of the material of the ring (4).

7. Door frame of a wind turbine according to claim 6, **characterized in that** the ring (4) comprises a step in the thickness of the material of the ring (4) from the first thickness in the first radial section of the material of the ring (4), to the second thickness in the second radial section of the material of the ring (4).

8. Door frame of a wind turbine according to claim 6, **characterized in that** the ring (4) comprises an area with a gradual transition in the thickness of the material from the first thickness to the second thickness, in a radial section between the first and the second radial section of the ring (4).

9. Door frame of a wind turbine according to claim 8, **characterized in that** the shape of the material in the gradual transition area, seen in a crosscut through the material of the ring, comprises a radius.

10. Door frame of a wind turbine according to claim 8, **characterized in that** the shape of the material in the gradual transition area, seen in a crosscut through the material of the ring, comprises a linear section.

11. Door frame of a wind turbine according to one of the claim 6 to 10, **characterized in that** the first radial section of the ring is a section with a larger radius than the second radial section.

12. Door frame of a wind turbine according to one of the claim 6 to 11, **characterized in that** the first thickness is smaller than the second thickness.
